# EUROPÄISCHE PATENTSCHRIFT

(11) **EP 2 099 008 B1**
(45) Veröffentlichungstag und Bekanntmachung des Hinweises auf die Patenterteilung: **24.04.2013**
(21) Anmeldenummer: 09001329.3
(22) Anmeldetag: 30.01.2009
(51) Int. Cl.: G01M 1/12, G09B 25/00, G09B 23/00

(54) **Modellherstellung**
Model production
Fabrication de modèle

(30) Priorität: 01.02.2008 DE 102008007213
(43) Veröffentlichungstag der Anmeldung: 09.09.2009
(73) Patentinhaber: PROTO TECHNIK Gesellschaft für Gestaltung technischer Produkte mbH, 85232 Bergkirchen/Gada (DE)
(72) Erfinder: Sliwanski, Lutz, 80995 München (DE)
(74) Vertreter: Mischung, Ralf

(56) Entgegenhaltungen:
- US-A- 3 174 330
- US-A- 4 991 437

## Beschreibung

Die vorliegende Erfindung betrifft ein Verfahren zur Herstellung eines Modells nach Vorgabe eines Originals, eine Vorrichtung zur Durchführung des Verfahrens sowie ein Verfahren zur Überprüfung der Herstellungsqualität des hergestellten Modells.

Zur Herstellung komplexer Produkte werden vorab oftmals Modelle erstellt, die dem zu fertigenden Original möglichst nahe kommen. Insbesondere aus der Automobilbranche ist die Herstellung derartiger Modelle bekannt, beispielsweise für Türen oder Kofferraum- oder Motorraumklappen. Zweck der Modelle ist es, dem später herzustellenden Original möglichst nahe zu kommen, um Gewicht, Handhabung, Design etc. möglichst nahe an der Realität prüfen bzw. begutachten zu können.

Von besonderer Bedeutung bei der Herstellung derartiger Modelle ist es, das in der Planung vorgegebene Sollgewicht möglichst genau zu erreichen. Darüber hinaus soll die Lage des in der Planungsphase festgelegten Schwerpunktes durch das Modell möglichst genau wiedergegeben werden. Mit anderen Worten, Gesamtgewicht und Lage des Schwerpunkts des Modells sind bestmöglich an die Vorgaben der Planung heranzuführen, um ein hinsichtlich seiner physikalischen Eigenschaften möglichst originalgetreues Modell zu bekommen.

Aus dem Stand der Technik ist bekannt, die Modelle - wenigstens teilweise - aus dem Vollen zu fräsen bzw. durch Wegnahme von Material eines Ausgangskörpers nach und nach die Gestalt des angestrebten Modells zu erzielen. Abgesehen von dem hohen Material- und Fertigungsaufwand erreicht ein solches Modell meist weder das vorgegebene Sollgewicht noch die vorgegebene Lage des Schwerpunkts, was zu unbefriedigenden Ergebnissen führt.

Aus der DE 296 22 132 U1 ist eine Messvorrichtung zur Ermittlung von Masseverhältnissen bekannt. Über eine zu messende Neigung einer Pendelvorrichtung wird die Schwerpunktlage eines Messobjekts ermittelt, wobei mehrachsiges Verschieben oder Verschwenken nötig ist und der Aufbau der Vorrichtung insgesamt aufwändig und kompliziert ist. Die einfache Herstellung eines Modells mit vorgegebener Schwerpunktsklage ist damit nicht möglich. Auch die Schriften US 4 991 437 und GB 3 174 330 beschäftigen sich mit der Bestimmung des Schwerpunktes von Modellen.

Aufgabe der Erfindung ist es daher, ein Verfahren zur Herstellung eines Modells sowie eine dazu geeignete Vorrichtung anzubieten, mit der ein in seinen geometrischen Daten vorgegebenes Modell so wirklichkeitsnah hergestellt werden kann, dass das Gewicht des Modells und sein Schwerpunkt den Vorgaben bis auf sehr enge Toleranzen angenähert werden kann. Weiterhin soll ein Verfahren zur Überprüfung der erzielten Schwerpunktslage angeboten werden.

Die Aufgabe wird gelöst durch ein Verfahren nach Anspruch 1, 2 bzw. 14 und eine Vorrichtung nach Anspruch 10.

Die Erfindung geht von der Erkenntnis aus, dass ein Modell besonders wirklichkeitsnah ausgebildet werden kann, wenn sich das Gewicht des Modells "von oben" oder "von unten" an das angestrebte Sollgewicht annähert. Das vorzugsweise aus einzelnen Komponenten zusammengesetzte Modell erlangt dabei in einem ersten Schritt ein Gewicht, welches größer oder geringer ist als das Sollgewicht. Durch wiederholtes Einbringen oder wegnehmen einzelner Zusatzgewichte an oder in verschiedenen Komponenten des zusammengebauten Modells wird das Ist-Gewicht nach und nach dem Soll-Gewicht angenähert.

Vorteilhafterweise können die nach und nach eingebrachten oder entfernten Zusatzgewichte an geeigneten unterschiedlichen Positionen eingebracht bzw. entfernt werden, an denen es die Bauteilgeometrie oder auch der spätere Verwendungszweck des Originals besonders vorteilhaft zulässt.

Die ebenfalls erforderliche bestmögliche Annäherungen des Modell-Schwerpunkts an die vorgegebene Soll-Lage des Original-Schwerpunkts wird durch geschickte Wahl der Orte, an denen die Zusatzgewichte eingebracht oder entfernt werden, erreicht. Da jedes zusätzlich eingebrachte oder entfernte Gewicht die Lage des Schwerpunkts in allen drei zueinander senkrecht verlaufenden Richtungen des Raumes verändert, umfasst das erfindungsgemäße Verfahren zur Herstellung eine permanente Kontrolle des aktuell bestehenden Modell-Schwerpunkts gegenüber der aus der Planung vorgegebenen Schwerpunktsposition.

Eine besonders vorteilhafte Ausführungsform ist dabei gerichtet auf die schrittweise Annäherung an das Sollgewicht "von unten", wobei ausgehend von einem Startgewicht, welches kleiner ist als das angestrebte Sollgewicht, nach und nach Zusatzgewichten an dem Modell angebracht werden.

Dabei wird das Modell an einer Aufnahme befestigt, die um eine vorzugsweise horizontal angeordnete Achse (im Weiteren auch "X-Achse") frei drehbar ist. Der Schwerpunkt der Aufnahme liegt erfindungsgemäß in dieser X-Achse. Das auf die Aufnahme aufgesetzte bzw. aufgespannte Modell ist also zusammen mit der Aufnahme um die X-Achse frei drehbar. Die Gestalt der Aufnahme ist dabei so gewählt, dass die aus der Planung vorgegebene Soll-Lage des Modellschwerpunkts, also der Ort, an dem beim Original der Schwerpunkt liegt, ebenfalls in der X-Achse liegt. Zwei zueinander und zur X-Achse jeweils senkrecht verlaufende gedachte Achsen Y und Z spannen dabei einen gedachten Raum auf.

Wie vorerwähnt verhält sich die Aufnahme zur X-Achse "schwerpunktneutral", sie lässt sich also in jede Drehposition um die X-Achse herum ausrichten und verharrt in dieser Lage, da der Schwerpunkt der Aufnahme in der X-Achse liegt. Für ein auf die Aufnahme aufgesetztes Modell gilt dies nur dann, wenn der aktuell aus Modell und Aufnahme gebildete gemeinsame Schwerpunkt ebenfalls in der X-Achse liegt - konsequenterweise muss daher also auch der Modellschwerpunkt selbst in der X-Achse liegen, um die Schwerpunktsneutralität bezüglich der X-Achse zu erreichen, wodurch das Modell diesbezüglich eine Annäherung an die Vorgaben aus der Planungsphase erfährt.

Weicht der aktuelle Schwerpunkt des Modells dagegen in Y- oder Z-Richtung von der X-Achse ab (bspw. nach Anbringung eines ersten Zusatzgewichtes am Modell), so schneidet das vom aktuellen Schwerpunkt zur Erde gerichtete Lot die X-Achse nicht mehr, so dass die am aktuellen Schwerpunkt angreifende Gewichtskraft des Modells ein Drehmoment um die X-Achse bewirkt (Dies gilt nur dann nicht, wenn der aktuelle Schwerpunkt nur in Z-Richtung nach oben oder unten von der X-Achse abweicht, sich infolge dessen also ein labiles oder stabiles momentanes Gleichgewicht einstellt. In einer frei wählbaren, beliebigen Drehposition um die X-Achse kann das Modell dann aber nicht verharren.)

Infolgedessen wird sich das Modell mit der Aufnahme um die X-Achse drehen wollen. Dieses Bestreben lässt sich visuell leicht überprüfen und als Information dahingehend auswerten, das aktuell eine Abweichung des Schwerpunkts von der anzustrebenden X-Achse weg vorherrscht. Das Maß dieses Bestrebens, also die Größe des Drehmoments, mit welcher das Model sich zu drehen trachtet, kann dabei als Maß für die Abweichung des Schwerpunkts von der X-Achse angesehen werden und könnte über einen geeigneten Drehmomentsensor auch systematisch erfasst und ausgewertet werden.

Durch geschickte Platzierung eines oder mehrerer Zusatzgewichte an dem Modell kann die resultierende Lage des aktuellen Schwerpunkts sodann korrigiert werden, um diesen wieder näher an die X-Achse heranzuführen. Wenn das Modell in jeder beliebigen Drehlage um die X-Achse herum ausrichtbar ist, ohne eigenständig eine Weiterdrehung anzustreben, herrscht dagegen Gewissheit darüber, dass der aktuelle Schwerpunkt in der X-Achse liegt und damit die Planungsvorgaben bezüglich dieser Achse erfüllt.

Weiterhin ist erfindungsgemäß die Lage des aktuellen Schwerpunktes entlang der X-Achse zu ermitteln, um auch hier die genaue Anpassung an die Planungsvorgaben erreichen zu können. Dies geschieht erfindungsgemäß mit geeigneten Sensoren, welche die Ermittlung des Schwerpunkts in X-Richtung gestatten. Dabei kann es sich insbesondere um zwei zu beiden Seiten der Aufnahme angeordnete Waagen handeln, auf denen die X-Achse ruht. Die Summe der erfassten Last beider Waagen erlaubt die Ermittlung des aktuellen Gewichts des Modells, während die Verteilung der Last auf die Waagen über einfache Hebelgesetze die Ermittlung der X-Position des aktuellen Schwerpunkts gestattet. Auf eine alternative Ausführungsform des Verfahrens soll später noch eingegangen werden.

Das erfindungsgemäße Verfahren ist also gerichtet auf die Herstellung eines Modells, insbesondere eines Modells einer Kraftfahrzeugkomponente. Das Modell soll nach Vorgabe eines Originals ein vorgebbares Soll-Gewicht und an einer vorgebbaren Position im Raum den Soll-Schwerpunkt aufweisen. Das Verfahren umfasst dabei folgende Schritte:
a) Zusammenbau des Modells aus einzelnen Komponenten unter Annäherung an das angestrebte Sollgewicht (G), ausgehend von einem Startgewicht (G₀), wobei G₀ < G;
b) Anordnen des zusammengebauten Modells an einer Aufnahme (A) einer Messvorrichtung (V), wobei die Aufnahme (A) um eine vorzugsweise horizontal angeordnete Achse (X) frei drehbar ist, wobei der Schwerpunkt der Aufnahme (A) in der Drehachse (X) liegt und wobei Sensoren (W₁, W₂) zur Erfassung des auf der Achse (X) lastenden Gewichts vorgesehen sind;
c) Einbringen und/oder Umordnen von Zusatzgewichten an oder in wenigstens einer Komponente des Modells zur weiteren Annäherung an das Sollgewicht (G) und/oder zur Veränderung der aktuellen Schwerpunktslage in Richtung auf den Sollschwerpunkt (S),
   d₁) Prüfung des Gesamtgewichts anhand der Sensorensignale und/oder
   d₂) rechnerisch Überprüfung der Lage des aktuellen Schwerpunkts in X-Richtung anhand der Sensorensignale und/oder
   d₃) visuelle Überprüfung der aktuellen Schwerpunktlage in Y- oder Z-Richtung anhand von schwerkraftverursachten Drehbewegungen des Modells um die X-Achse, verursacht durch X- oder Y-Abweichungen des aktuellen Schwerpunkts vom Sollschwerpunkt (S).
e) Wiederholung der Schritte c) und d) bis die Abweichungen zwischen Sollund Istwerten für das Gesamtgewicht und/oder den Schwerpunkt innerhalb vorgebbarer Toleranzen liegen.

In Abfolge der Verfahrensschritte wird also zunächst ein in seiner Geometrie und seinem Gewicht bzw. Schwerpunkt vorgegebenes Modell - vorzugsweise aus einzelnen Komponenten - zusammengebaut. Die Beschaffenheit der einzelnen Komponenten kann je nach Modell oder auch innerhalb des Modells variieren, so dass Kunststoff, Metall, Kohlefaser, Verbundwertstoffe oder Ähnliches allein oder gemeinsam zum Einsatz kommen können.

Ein solchermaßen in seinen geometrischen Ausdehnungen weitgehend fertig gebautes Modell hat sich dem Soll-Gewicht zu beispielsweise 80% angenähert, und auch die aktuelle Lage des Schwerpunkts hat sich vorzugsweise innerhalb einer vorgegebenen Toleranz an die Soll-Lage gemäß Planungsvorgabe angenähert.

Anschließend wird das Modell auf die vorbeschriebene Aufnahme aufgesetzt bzw. aufgespannt. Sofern der aktuelle Schwerpunkt nicht in der X-Achse liegt, wird das Modell eine Drehbewegung um die X-Achse vollführen wollen, jedenfalls aber nicht in eine beliebige Drehposition ausrichtbar sein. Zum Ausgleich des durch die Schwerpunktsabweichung von der X-Achse gebildeten Drehmoments werden sodann Zusatzgewichte an oder in dem Modell angeordnet. Dadurch wird der aktuelle Schwerpunkt verschoben. Eine Verringerung des resultierenden Drehmoments um die X-Achse weist dann darauf hin, dass der Schwerpunkt weiter an diese Achse herangerückt ist. Gleichzeitig kann über die vorbeschriebenen Sensoren das aktuelle Gesamtgewicht des Modells erfasst werden, welches durch schrittweisen Zuwachs an das Sollgewicht angenähert wird. Schließlich lässt sich auch die aktuelle Lage des Schwerpunkts in X-Richtung ermitteln und durch Einbringen von Zusatzgewichten verändern.

Es versteht sich von selbst, dass ein eingebrachtes Gewicht die Lage des aktuellen Schwerpunkts im allgemeinsten Fall in allen drei Richtungen X, Y und Z des Raumes verschiebt. Durch geschickte Anordnung der Zusatzgewichte, deren Masse mit fortschreitender Annäherung an die Vorgaben vorzugsweise geringer wird, lässt sich der Schwerpunkt und das Gewicht des Modells nach und nach an die Sollvorgaben heranführen.

Sobald das Modell in jeder Drehlage um die X-Achse stabil ausgerichtet werden kann ohne sich selbst weiterdrehen zu wollen, das ermittelte Gesamtgewicht der theoretischen Vorgabe entspricht und wenn zugleich die aus den Hebelgesetzen ermittelte aktuelle Schwerpunktslage in X-Richtung innerhalb der vorgegebenen Toleranzen liegt, entspricht das Modell hinsichtlich Gewicht und Schwerpunkt den Planungsvorgaben (innerhalb vorgebbarer Toleranzen) hinreichend genau und stellt so insbesondere hinsichtlich seiner physikalischen Eigenschaften ein hinreichend genaues Abbild des später herzustellenden Originals dar.

Wie vorstehend erwähnt, lässt sich das Gesamtgewicht und die aktuelle Lage des Modellschwerpunkts in X-Richtung vorteilhaft ermitteln, indem die X-Achse zu beiden Seiten der Aufnahme eine Wägezelle bzw. eine Waage beaufschlagt. Die Summe der durch die beiden Waagen erfassten Last entspricht (abzüglich des Gewichts der X-Achse und der Aufnahme oder weiterer, vorzugsweise schwerpunktsneutraler, Hilfsmittel) dem aktuellen Gewicht des Modells. Die von den beidseitig der Aufnahme angeordneten Waagen erfassten Belastungen geben über die Hebelgesetze ferner Auskunft über die aktuelle Lage des Modell-Schwerpunkts in X-Richtung.

Die vorstehend beschriebene Ausführungsform eignet sich für Modelle, deren Geometrie das Durchdringen mit der X-Achse erlaubt, ohne dass Komponenten des Modells der Achse im Wege stehen.

Ein anderer Fall wäre beispielsweise dann gegeben, wenn das Modell eine im Wesentlichen durchgehende Oberfläche oder Geometrie aufweist, die insbesondere keine solche Öffnung bietet, durch die die X-Achse hindurchgeführt werden könnte mit der Bedingung, dass auch der vorbestimmte Schwerpunkt auf dieser X-Achse zu liegen kommt. Daher sieht eine alternative Ausführungsform des Verfahrens vor, dass die Aufnahme an einem auskragenden freien Ende der X-Achse angeordnet wird. Auf diese Aufnahme kann das Modell vorteilhaft aufgespannt werden, ohne dass es von der X-Achse durchdrungen werden müsste. Stattdessen wird die X-Achse beispielsweise über zwei Waagen (oder etwa einen Drehmomentsensor) getragen, die sich beide auf der gleichen Seite der Aufnahme A befinden. Auch hier lässt sich die aktuelle Lage des Modellschwerpunkts durch Auswertung der Waagenergebnisse unter Nutzung der bekannten Hebelgesetze in X-Richtung ermitteln.

Zur Erfassung des aktuell vorherrschenden Gesamtgewichts des Modells sieht diese Variante des Verfahrens vor, dass die gesamte Vorrichtung (Modell, Aufnahme, X-Achse, Waagen oder Drehmomentsensoren und weitere Hilfsmittel) ihrerseits von einer Waage erfasst wird, aus deren Messergebnis das Gewicht des Modells ermittelt werden kann (Die Gewichte von Aufnahme, X-Achse, Waagen bzw. Drehmomentsensoren und weiterer Hilfsmittel werden dabei als bekannt angenommen bzw. vorab ermittelt). Diese Ausführungsform zeigt somit den Vorteil, auch solche Modelle hinsichtlich ihres Schwerpunkts und Gesamtgewichts optimal herstellen zu können, die ein Durchdringen mit der X-Achse nicht gestatten, bei denen sich die X-Achse also im Wesentlichen nur zu einer Seite der Aufnahme hin erstreckt.

Die vorstehend genannten Waagen oder Drehmomentsensoren sind stellvertretend für jeden geeigneten Sensor genannt, mit dem quantitativ oder qualitativ auf Gewichtskräfte des Modells Rückschlüsse gezogen werden können. Andere dem Fachmann bekannte Sensoren kommen also gleichermaßen in Frage, solange aus deren Messwerten das Gewicht des Modells und die Schwerpunktslage in X-Richtung ermittelbar ist.

Nach einer vorteilhaften Ausführungsform des Verfahrens werden die zu erwartenden Positionierungen von zusätzlichen Gewichten nach Lage und Gewicht vor dem Zusammenbau des Modells näherungsweise, vorzugsweise computergestützt, ermittelt. Eine solche näherungsweise Betrachtung schon vor dem Zusammenbau des Modells gestattet eine verbesserte Annäherung des Modellschwerpunkts an den SollSchwerpunkt und schließt beispielsweise solche Schwerpunktsabweichungen aus, die durch nachträgliches Anbringen von Zusatzgewichten nicht mehr ausgeglichen werden könnten.

Nach einer weiteren vorteilhaften Ausführungsform der Erfindung wird derjenige Bauraum der Komponenten, welcher im Original nicht für andere Zwecke freizuhalten ist, unter Berücksichtigung des angestrebten Sollgewichts und Schwerpunkts zum Einbau von Verstärkungen genutzt. Auch hierin zeigt sich ein besonderer Vorteil des erfindungsgemäßen Verfahrens gegenüber der aus dem Stand der Technik bekannten Praxis. Während dort das Modell-Gewicht "von oben nach unten" an das Sollgewicht angepasst wird, erlaubt das erfinderische Verfahren die Berücksichtigung besonderer mechanischer Erfordernisse des Originals auch für das Modell. Sofern besondere Steifigkeiten oder Festigkeiten an bestimmten Zonen des Modells bzw. Originals erforderlich sind können geeignete Verstärkungen oder Versteifungen im Rahmen des Gewichtsaufbaus gezielt vorgesehen werden.

Insbesondere in Bereichen, in denen beim späteren Original keine geometrischen oder sonstigen Hindernisse zu erwarten sind (Hohlräume, nicht genutzte Winkelbereiche etc.) können derartige Verstärkungen eingesetzt werden, wobei deren Gewicht selbstverständlich im Sinne eines der vorbeschriebenen Zusatzgewichte Einfluss findet auf Gesamtgewicht und Lage des Modellschwerpunkts. Das gezielte Einbringen von Verstärkungen oder Versteifungen im Rahmen der Modellentwicklung bzw. der Modellherstellung erlaubt also dessen besonders wirklichkeitsnahe Anpassung an das Original, was Bedeutung und Verwendbarkeit des Modells deutlich verbessert.

Eine erfindungsgemäße Vorrichtung zur Durchführung des vorbeschriebenen Verfahrens ist daher vorgesehen mit einer Aufnahme (A) zur lösbaren Befestigung des aus einzelnen Komponenten zusammengebauten Modells (M), wobei die Aufnahme (A) um eine vorzugsweise horizontal angeordnete Achse (X) frei drehbar ist, wobei der Schwerpunkt der Aufnahme (A) in der Drehachse (X) liegt, und wobei Sensoren zur Erfassung des auf der Achse (X) lastenden Gewichts vorgesehen sind.

Eine besonders vorteilhafte Handhabung des Verfahrens bzw. der Vorrichtung ergibt sich dadurch, dass eine Auswerteeinheit bereitgestellt wird, die zur Anzeige und/oder Verarbeitung der jeweils vom Modell auf die X-Achse einwirkenden Kräfte ausgebildet ist. Insbesondere vermag eine solche Auswerteeinheit das aktuell erfasste Gewicht des Modells bzw. die aus den Sensoren herleitbare X-Position des Modellschwerpunkts anzugeben. Diese Informationen, die nach den vorstehenden Verfahren zunächst nicht rein optisch zu überprüfen sind, lassen sich durch eine solche Auswerteeinheit leicht darstellen, wodurch die Fertigung des Modells vereinfacht und beschleunigt werden kann. Weiterhin kann das von einer Schwerpunktsabweichung resultierende Drehmoment um die x-Achse erfasst und von der Auswerteeinheit ausgewertet werden.

Grundsätzlich ist für die erfindungsgemäße Herstellung des Modells die Annäherung an das Sollgewicht "von unten" zu bevorzugen. Hierbei lassen sich evtl. zunächst falsch platzierte und/oder zu schwere Zusatzgewichte notfalls auch wieder entfernen, und es kann eine verbesserte Annährung an das Sollgewicht oder den Schwerpunkt mit neu anzubringenden Gewichten erfolgen.

Das Prinzip der Modellherstellung gestattet jedoch auch die Annäherung "von oben", also ausgehend von einem Modellgewicht größer als das Sollgewicht. Durch geschickte Wegnahme von Material lässt sich sowohl das Modellgewicht als auch dessen Schwerpunktslage an die Vorgaben anpassen. Auch die vorbeschriebene Vorrichtung eignet sich für dieses umgekehrte Verfahren gleichermaßen. Besondere Sorgfalt ist jedoch der Entfernung des Material geboten, da die fehlerhafte Entfernung von Material (bspw. durch Fräsen, Sägen, Ätzen, Bohren, Schaben etc.) nur schwer bzw. mühsam korrigiert werden kann.

Ein nach den vorbeschriebenen erfinderischen Verfahren hergestelltes Modell weist einen Schwerpunkt auf, dessen Lage innerhalb enger Toleranzen derjenigen eines Originals entspricht. Eine Überprüfung der Lage des Schwerpunkts des Modells stellt eine unverzichtbare Qualitätskontrolle dar, um die Tauglichkeit des Modells jederzeit sicherzustellen. Für einen nicht mit der Herstellung des Modells befassten Dritten gestaltet sich die Ermittlung des Modellschwerpunkts schwierig. In Ergänzung zum vorbeschriebenen Herstellungsverfahren betrifft die Erfindung daher auch ein Verfahren zur Überprüfung des Herstellungsergebnisses und insbesondere zur Ermittlung des Schwerpunkts eines nach dem vorbeschriebenen Verfahren hergestellten Modells.

Das Verfahren umfasst dabei folgende Schritte:
a) Aufhängen des Modells (M) an einem ersten am Model angeordneten Befestigungspunkt (P₁) mittels eines flexiblen Strangs (R), an dem oberhalb des Befestigungspunkts (P₁) in vorgebbarem Abstand wenigstens zwei Markierungselemente (E₁, E₂) angeordnet sind;
b) Auspendeln des Modells (M), bis es eine Ruhelage einnimmt, wobei die Markierungselemente (E₁, E₂) auf einer ersten Geraden (L₁) zu liegen kommen;
c) Rechnergestützte Ermittlung der räumlichen Lage der Markierungselemente (E₁, E₂) und des Modells (M)
d) Wenigstens einmalige Wiederholung der Schritte a) bis c), wobei das Model für jede Wiederholung an einem weiteren, vom ersten Punkt (P₁) verschiedenen Befestigungspunkt (P₂, P₃ ...) aufgehängt wird, so dass die Markierungselemente (E₁, E₂) auf einer weiteren Geraden (L₂, L₃...) zu liegen kommen;
e) Rechnergestützte Ermittlung des Schnittpunkts oder der Mitte des minimalen Abstands der Geraden (L₁, L₂, L₃...) als tatsächlicher Schwerpunktsort (S) des Modells.

Die einzelnen Schritte sollen kurz erläutert werden. Zunächst wird das Modell an einer (beliebigen, jedoch nicht den Schwerpunkt bildenden) Position mit einem flexiblen Strang verbunden (beispielsweise dünnes Seil aus Draht oder Kunststoff oder feingliedrige Kette). Sodann wird das Modell an dem Strang frei hängend aufgehängt. Der Strang wird dabei auf Grund des Modellgewichts im Wesentlichen zu einer Geraden verformt, die in ihrer gedachten Verlängerung durch den Schwerpunkt des Modells läuft und lotrecht auf die Erde trifft. Oberhalb des Punktes, an dem der Strang an dem Modell befestigt ist, sind erfindungsgemäß zwei Markierungselemente in einem vorgebbaren Abstand zueinander an dem Strang angeordnet, wobei es sich insbesondere um kugelförmige oder sonstige optisch oder haptisch erfassbare bzw. mit Messgeräten erkennbare Elemente handeln kann. Konsequenterweise liegen auch diese Markierungselemente auf der vorbeschriebenen Geraden.

Nachdem das Modell ausgependelt hat, also eine stabile Lage im Raum eingenommen hat, soll diese Lage im Raum erfasst werden. Dazu werden einzelne Oberflächenpunkte des Modells mit einem geeigneten Abtastelement angefahren, wobei der Punkt der Berührung zwischen Abtastelement und Modell mit seinen Koordinaten erfasst wird. (beispielsweise durch ein computergestütztes System, mit dem einzelne Punkte in einem Raum angefahren und mit den entsprechenden Daten abgespeichert werden können). Eine Anzahl von vier bis sechs unterschiedlichen Punkten des Modells kann dabei schon ausreichen. Auch eine Erfassung der räumlichen Lage des Modells bzw. einzelner Oberflächenpunkte darauf mit optischen Mitteln, per Ultraschall o.ä. ist denkbar.

In einer das Abtastverfahren steuernden Steuereinheit oder einer Speicher- bzw. Datenverarbeitungseinheit (im folgenden allgemein als "Steuereinheit" bezeichnet) ist die Geometrie des Originals, an welche sich diejenige des Modells bestmöglich angepasst haben sollte, hinterlegt. Im nächsten Verfahrensschritt ist es daher möglich, aus den zuvor erfassten Berührungspunkten die tatsächliche Ausrichtung des aufgehängten Modells im Raum vollständig festzulegen. Ein sogenannter "Best-Fit"-Modus gestattet der Steuereinheit, das anhand seiner Oberflächenpunkte erfasste Modell in der Steuereinheit virtuell so zu drehen bzw. zu verschieben, dass dessen Lage derjenigen des im Raum real aufgehängten Modells entspricht. Die gesamte Lage des Modells, d. h. die genaue Ausrichtung der Geometrie des Modells lässt sich auf diese Weise ermitteln, und erforderlichenfalls an weitere Steuer- bzw. oder Recheneinheiten übertragen.

Als Nächstes werden auch die beiden Markierungselemente in ihrer räumlichen Lage erfasst, so dass auch die von diesen beiden Elementen gebildete Gerade in das von der Steuereinheit erfasste Modell übertragen bzw. virtuell in dieses hineingelegt werden kann.

Anschließend wird das Modell an einem anderen Oberflächenpunkt mit dem Strang verbunden und erneut in der vorbeschriebenen Weise aufgehängt. Es wird sich anders im Raum ausrichten und schließlich eine zweite Ruhelage einnehmen, die sich von der ersten unterscheidet. Gleichwohl verläuft die durch den Strang bzw. die daran befestigten Markierungselemente gebildete Gerade wieder durch den später zu ermittelnden Schwerpunkt des Modells. In gleicher Weise wie vorbeschrieben wird auch hier wieder die (geänderte) Lage des Modells ebenso wie diejenige der Markierungselemente in einer Steuereinheit erfasst.

Die beiden aus den Markierungselementen definierten Geraden schneiden sich in dem Rechner-Modell in einem Schnittpunkt, der dem tatsächlichen Schwerpunkt des Modells entspricht, so dass dessen Koordinaten damit genau erfasst und ausgegeben werden können. Verlaufen die beiden Geraden (toleranzbedingt) windschief zueinander, so könnte der Schwerpunkt näherungsweise auf der Mitte des kürzesten Abstands der beiden Geraden angenommen werden. Ein Vergleich mit den Vorgaben des Originals (Koordinaten seines Schwerpunkts) erlaubt anschließend unmittelbar Rückschlüsse auf die Genauigkeit der Herstellung des Modells.

Bei Bedarf kann das Modell in weiteren unterschiedlichen Positionen aufgehängt werden, um weitere Geraden für eine exaktere Schnittpunkts- bzw. Schwerpunktsbestimmung zu erhalten.

Weitere vorteilhafte Ausführungsformen der Erfindungen ergeben sich aus den Unteransprüchen.

Nachfolgend soll eine Ausführungsform des erfindungsgemäßen Herstellungs- bzw. Kontrollverfahrens anhand von Figurenbeispielen erläutert werden. Dabei zeigen
- Fig. 1: eine schematische und perspektivische Ansicht einer erfindungsgemäßen Vorrichtung mit aufgespanntem Modell zur Durchführung des Verfahrens,
- Fig. 2: die Darstellung gemäß Fig. 2 in Detailansicht ohne Modell und
- Fig. 3: eine Vorrichtung zur erfindungsgemäßen Ermittlung des Modellschwer- punkts

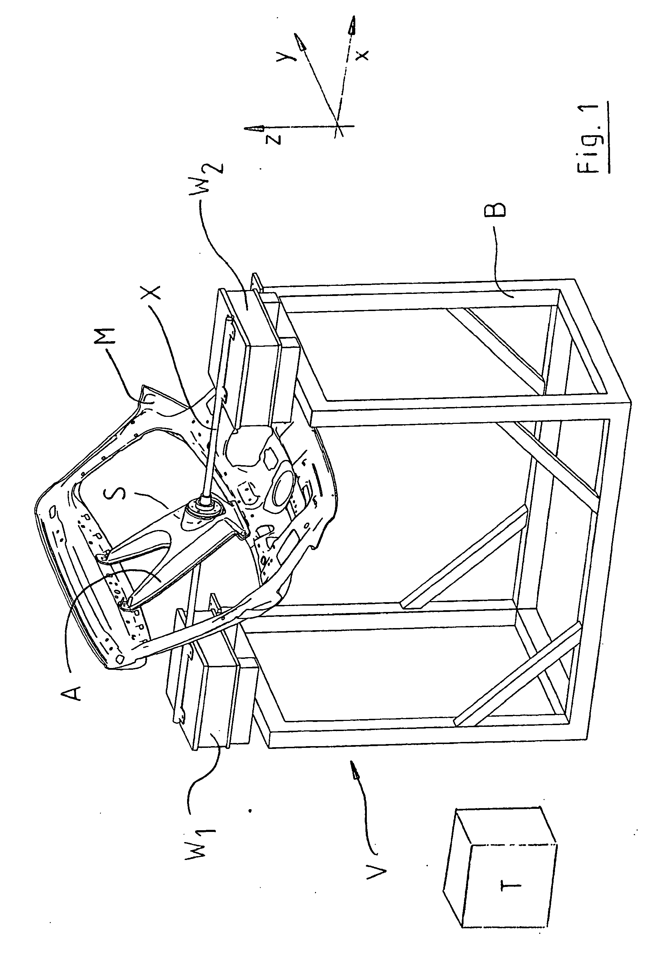

Eine in Fig. 1 dargestellte erfindungsgemäße Vorrichtung V umfasst ein Gestell B, auf dem zwei als Waagen ausgebildete Gewichtssensoren W₁ und W₂ angeordnet sind. Oberhalb der Sensoren W₁ und W₂ verläuft eine auf beiden Sensoren aufliegende stangenartige Achse X, auf der eine im weitesten Sinne spinnenförmige Aufnahme A angeordnet ist. Die Aufnahme A lässt sich um die gedachte Achse X frei drehen, wobei der Schwerpunkt der Aufnahme A in der Achse X liegt. Dabei wird die Aufnahme A getragen von einem entlang der X-Achse ausgebildeten, stangenförmigen Element D, dessen Schwerpunkt ebenfalls in der X-Achse liegt. Die Aufnahme A ist auf der drehfest angeordneten Stange D frei drehbar gelagert. Entsprechend lässt sich die Aufnahme A (zunächst ohne daran befestigtes Modell M) in jeder beliebigen Drehposition um die Achse X bzw. Stange D anordnen, ohne dass diese von sich aus diese Ausrichtung ändert.

Auf die Aufnahme A ist ein Modell M einer Kraftfahrzeugheckklappe aufgespannt, wobei die Stange D eine für dieses Modell M nicht vorgesehene Scheibe bzw. eine Öffnung durchdringt. Das Modell M wurde nach Vorgaben geometrischer Daten eines zu erstellenden Originals aus einzelnen Komponenten zusammengebaut. Die Befestigung des Modells M auf der Aufnahme A wurde dabei so gewählt, dass der rechnerisch bzw. theoretisch vorgegebene Ort des Schwerpunkts des fertigen Modells ebenfalls in der X-Achse liegt.

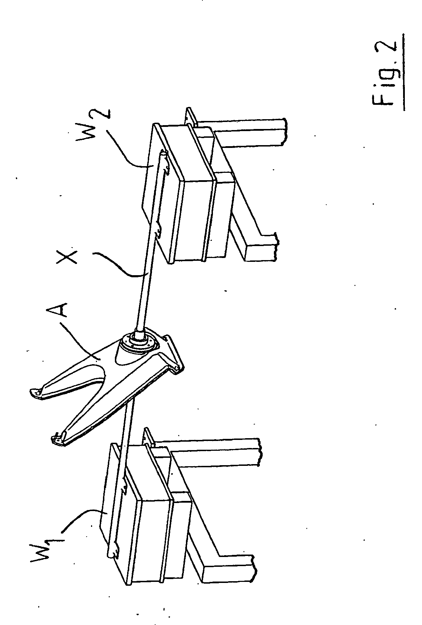

In der Darstellung gemäß Fig. 2 ist der Vorrichtungsaufbau ohne aufgespanntes Modell M dargestellt, so dass nur die für die Befestigung des Modells M auf der Stange D erforderliche Aufnahme A zu sehen ist.

Die Verwendung der Vorrichtung V gemäß Fig. 1 bzw. Fig. 2 erfolgt folgendermaßen:

Ein vorgefertigtes Modell M wird anhand vorgegebener geometrischer Daten aus einzelnen Komponenten zusammengebaut. Das Modell hat zu diesem Zeitpunkt ein Gesamtgewicht G₀, welches unter dem angestrebten Soll-Gewicht G des Originals liegt. Das Verhältnis G₀ / G könnte beispielsweise bei etwa 0,8 liegen. Das so vorgefertigte Modell M wird auf die Aufnahme A aufgespannt, so dass es sich mit samt der Aufnahme A um die Stange D frei drehen kann. Eine in Y- oder Z-Richtung bestehende Abweichung des aktuellen Modell-Schwerpunkts vom theoretisch vorgegebenen SollSchwerpunkt (S) wird dazu führen, dass das Modell M eine teilweise Drehung um die X-Achse vollführt, um das aus der Abweichung resultierende Drehmoment auszugleichen. Dieses Bestreben ist u.a. visuell erkennbar und erlaubt Rückschlüsse auf sinnvolle Positionierungsorte weiterer Zusatzgewichte, um den neuen Schwerpunkt näher an die Soll-Position heranzurücken.

Zugleich geben die gegebenenfalls mit einer Auswerte- und Steuereinheit P verbundenen Wägesensoren W₁ und W₂ einerseits Auskunft über das aktuelle Gewicht des Modells M und andererseits Auskunft über die Lage des Modell-Schwerpunkts entlang der X-Achse, was in Verbindung mit dem gemessenen Modellgewicht und den auf jeder Wägezelle erfassten Kräften aus den Hebelgesetzen leicht zu ermitteln ist.

Durch aufeinanderfolgende Platzierung von einzelnen Gewichten an dem Modell, wozu auf Verstärkungen oder Versteifungen an bzw. in einzelnen Modellkomponenten gehören, wird einerseits das aktuelle Gewicht des Modells M nach und nach angehoben und dem angestrebten Sollgewicht G angenähert. Andererseits wird der ModellSchwerpunkt durch die zusätzlich eingebrachten Gewichte jeweils in seiner Lage verändert und bei geschickter Platzierung der Gewichte dem Ort des Soll-Schwerpunkts S angenähert. Die zusätzliche Aufbringung bzw. Umgruppierung der Zusatzgewichte erfolgt im Rahmen des zu erreichenden Sollgewichts solange, bis das Modell M jede eingenommene Drehlage um die X-Achse bestmöglich beibehält. Dann ist sichergestellt, dass der Schwerpunkt des Modells an den Soll-Schwerpunkt S in X-, Y-, und Z-Richtung bestmöglich angenähert ist und das Modell hinsichtlich Gesamtgewicht und Schwerpunktlage dem Original so gut wie möglich entspricht.

In Fig. 1 ist die Stange D, welche zugleich die X-Achse verkörpert, drehfest auf den Wägezellen W₁ und W₂ angeordnet, während sich die Aufnahme A um die Stange frei drehen kann. Zu Erfassung und Auswertung eines Drehmoments, welches von einer Schwerpunktsabweichung verursacht wird und das Modell M mit der Aufnahme A um die x-Achse zu drehen trachtet, könnte die Stange D auch drehfest mit der Aufnahme A verbunden und drehbar auf den Wägezellen gelagert sein. Ein mit der Stange D gekoppelter Drehmoment-Sensor könnte das Drehmoment insbesondere quantitativ erfassen und an eine Steuereinheit signalisieren, um das Maß der Abweichung von der X-Achse bewerten und deren Korrektur (Ort und Masse der weiteren Zusatzgewichte am Modell) besser bestimmen zu können.

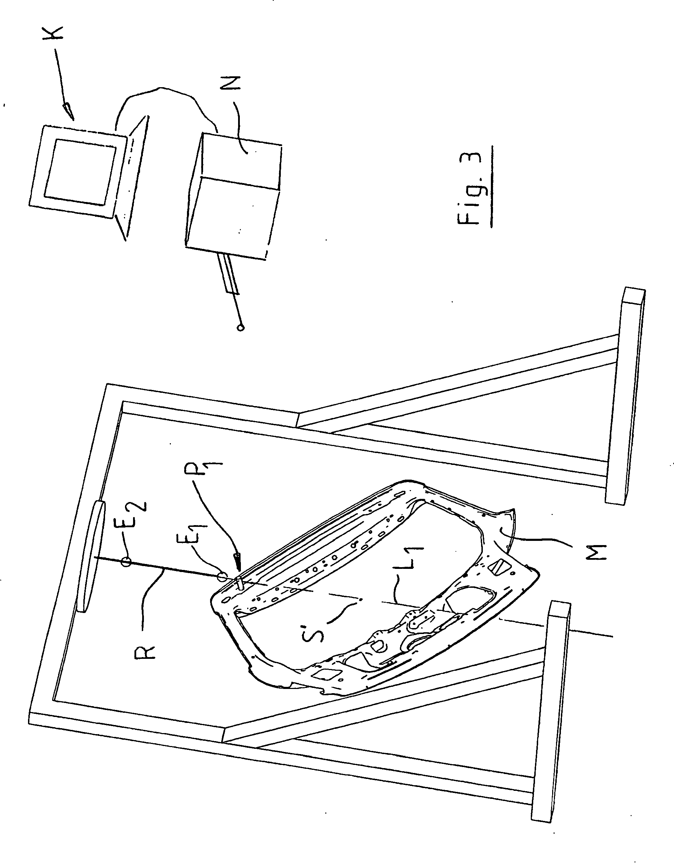

Fig. 3 zeigt eine einfache Vorrichtung zur Ermittlung bzw. Überprüfung des tatsächlich realisierten Schwerpunkts eines Modells, welches nach dem vorherbeschriebenen Verfahren hergestellt wurde.

An eine nicht näher bezeichnete Balkenkonstruktion ist ein flexibler Strang R angebunden, an dessen freiem unteren Ende ein erfindungsgemäß hergestelltes Modell M an einem ersten Befestigungspunkt P₁ befestigt ist. Auf Grund der Schwerkraft richtet sich das Modell M in einer bestimmten stabilen Lage aus, wobei der Strang R im Wesentlichen entlang einer Gerade L₁ gespannt wird. An dem Strang R oberhalb des Befestigungspunktes P₁ sind zwei Markierungselemente E₁ und E₂ angeordnet, die einen vorgebbaren Abstand haben und sich bei angehängtem Modell M ebenfalls entlang der Geraden L₁ ausrichten.

Nach einem anerkannten physikalischen Prinzip läuft die gedachte Gerade L₁ dabei durch den zu ermittelnden und zunächst unbekannten Schwerpunkt S' des Modells M.

Anhand einer nur schematisch dargestellten Abtastvorrichtung N können nun einzelne Oberflächenpunkte auf den Modul M abgetastet und deren Lage im Raum erfasst und abgespeichert werden. In einer Verarbeitungs- oder Steuereinheit K sind dabei die geometrischen Daten des Originals hinterlegt, dem das Modell bestmöglich entsprechen soll. Anhand der erfassten Abtastpunkte vermag die Auswerteeinheit K das gesamte Modell M in seiner räumlichen Lage virtuell auszurichten und diese Lage anhand geeigneter Daten zu speichern. In gleicher Weise werden die beiden Markierungselemente E₁ und E₂ bzw. die durch diese Elemente verlaufende Gerade L₁ ermittelt. Somit ist zu diesem Zeitpunkt die Ausrichtung des Modells M im Raum und die Lager der durch seinen Schwerpunkt verlaufenden Geraden L₁ bekannt bzw. in der Auswerte- oder Recheneinheit K hinterlegt.

In einem nächsten Schritt, an den sich zu Kontrollzwecken noch weitere Schritte anschließen können, aber nicht müssen, wird das Modell M an einem anderen, in Fig. 3 nicht näher dargestellten Befestigungspunkt P₂ angehängt. Wieder wird es sich im Raum stabil ausrichten und die Ausrichtungselemente E₁ und E₂ auf eine (nicht dargestellte) Gerade L₂ bringen, die durch den Schwerpunkt S' des Modells läuft. Eine erneute Erfassung einzelner Oberflächenpunkte des so ausgerichteten Modells M durch die Abtastvorrichtung N gestattet wiederum die vollständige virtuelle Erfassung der Lage des Modells M im Raum, die sich diesmal von der vorherigen Lage unterscheiden wird. Gleichwohl wird auch die nunmehr ermittelte Gerade L₂ wieder durch den Schwerpunkt F' des Modells laufen. Der Schnittpunkt dieser beiden Geraden lässt sich durch die Rechen- bzw. Auswerteeinheit K rechnerisch ermitteln und in Bezug setzen zu den ebenfalls im Rechner hinterlegten geometrischen Daten des im Raum erfassten Modells M. Dieser Schnittpunkt stellt den tatsächlichen Schwerpunkt S' des Modells M dar, dessen Lage anschließend mit der durch das Original vorgegebenen, in Datenform vorliegenden Soll-Lage verglichen werden kann. Auf diese Weise lässt sich einfach und schnell überprüfen, ob bzw. inwieweit das hergestellte Modell in seiner Schwerpunktslage mit den Vorgaben aus der Planung des Originals übereinstimmt.

## Patentansprüche

1. Verfahren zur Herstellung eines Modells (M) insbesondere eines Modells einer Kraftfahrzeugkomponente, welches nach Vorgabe eines Originals ein vorgebbares Sollgewicht (G) und an einer vorgebbaren Raumposition einen Soll-Schwerpunkt (S) aufweist, umfassend folgende Schritte:
a) Aufbau des Modells unter Annäherung an das angestrebte Sollgewicht (G), ausgehend von einem Startgewicht (G₀), wobei G₀ < G;
b) Anordnen des zusammengebauten Modells an einer Aufnahme (A) einer Messvorrichtung (V), wobei die Aufnahme (A) um eine gedachte Achse (X) frei drehbar ist, wobei die Aufnahme drehfest mit oder drehbar um ein entlang der X-Achse ausgebildetes Element (D) angeordnet ist, wobei der Schwerpunkt der Aufnahme (A) in der Drehachse (X) liegt, und wobei Sensoren (W₁, W₂) zur Ermittlung des auf der Achse (X) lastenden Gewichts vorgesehen sind;
c) Einbringen und/oder Umordnen von Zusatzgewichten an oder in wenigstens einer Komponente des Modells zur weiteren Annäherung an das Sollgewicht (G) und/oder zur Veränderung der aktuellen Schwerpunktslage in Richtung auf den Sollschwerpunkt (S),
d₁) Prüfung des Gesamtgewichts anhand der Sensorensignale und/oder
d₂) rechnerische Überprüfung der Lage des aktuellen Schwerpunkts in X-Richtung anhand der Sensorensignale und/oder
d₃) visuelle und/oder messtechnische Überprüfung der aktuellen Schwerpunktlage in Y- oder Z-Richtung anhand von schwerkraftverursachten Drehbewegungen oder Drehmomenten des Modells um die X-Achse, verursacht durch Y- oder Z-Abweichungen des aktuellen Schwerpunkts vom Sollschwerpunkt (S).
e) Wiederholung der Schritte c) und d) bis die Abweichungen zwischen Soll- und Istwerten für das Gesamtgewicht und/oder den Schwerpunkt innerhalb vorgebbarer Toleranzen liegen.

2. Verfahren zur Herstellung eines Modells (M) insbesondere eines Modells einer Kraftfahrzeugkomponente, welches nach Vorgabe eines Originals ein vorgebbares Sollgewicht (G) und an einer vorgebbaren Raumposition einen Soll-Schwerpunkt (S) aufweist, umfassend folgende Schritte:
a) Aufbau des Modells unter Annäherung an das angestrebte Sollgewicht (G), ausgehend von einem Startgewicht (G₀), wobei G₀ > G;
b) Anordnen des zusammengebauten Modells an einer Aufnahme (A) einer Messvorrichtung (V), wobei die Aufnahme (A) um eine gedachte Achse (X) frei drehbar ist, wobei die Aufnahme drehfest mit oder drehbar um ein entlang der X-Achse ausgebildetes Element (D) angeordnet ist, wobei der Schwerpunkt der Aufnahme (A) in der Drehachse (X) liegt, und wobei Sensoren (W₁, W₂) zur Ermittlung des auf der Achse (X) lastenden Gewichts vorgesehen sind;
c) Entfernen von Material von wenigstens einer Komponente des Modells zur weiteren Annäherung an das Sollgewicht (G) und/oder zur Veränderung der aktuellen Schwerpunktslage in Richtung auf den Sollschwerpunkt (S),
d₁) Prüfung des Gesamtgewichts anhand der Sensorensignale und/oder
d₂) rechnerische Überprüfung der Lage des aktuellen Schwerpunkts in X-Richtung anhand der Sensorensignale und/oder
d₃) visuelle und/oder messtechnische Überprüfung der aktuellen Schwerpunktlage in Y- oder Z-Richtung anhand von schwerkraftverursachten Drehbewegungen oder Drehmomenten des Modells um die X-Achse, verursacht durch Y- oder Z-Abweichungen des aktuellen Schwerpunkts vom Sollschwerpunkt (S).
e) Wiederholung der Schritte c) und d) bis die Abweichungen zwischen Soll- und Istwerten für das Gesamtgewicht und/oder den Schwerpunkt innerhalb vorgebbarer Toleranzen liegen.

3. Verfahren nach Anspruch 1 oder 2, **dadurch gekennzeichnet dass** die Achse (X) horizontal angeordnet wird.

4. Verfahren nach Anspruch 1, 2 oder 3, **dadurch gekennzeichnet dass** das Element (D) auf wenigstens einer Seite der Aufnahme (A) einen ersten Gewichts- oder Drehmomentsensor (W₁) belastet, und wobei ein weiterer Gewichts- oder Drehmomentsensor (W₂) von dem Element (D) auf der anderen Seite der Aufnahme (A) oder von der Vorrichtung (V) belastet wird.

5. Verfahren nach einem der vorigen Ansprüche, **dadurch gekennzeichnet dass** die zu erwartenden Positionierungen von zusätzlichen Gewichten oder zu entfernendem Material nach Lage und Gewicht vor dem Zusammenbau des Modells (M) näherungsweise ermittelt werden.

6. Verfahren nach einem der vorigen Ansprüche, **dadurch gekennzeichnet dass** derjenige Bauraum des Modells bzw. seiner Komponenten, welcher im Original nicht für andere Zwecke freizuhalten ist, unter Berücksichtigung des angestrebten Sollgewichts (G) und Schwerpunktes (S) zum Einbau von Verstärkungen genutzt wird.

7. Verfahren nach einem der vorigen Ansprüche, **dadurch gekennzeichnet dass** bereits vor dem Zusammenbau Zusatzgewichte und/oder Verstärkungen an oder in wenigstens einer Komponente des Modells (M) angeordnet werden.

8. Verfahren nach einem der vorigen Ansprüche, **dadurch gekennzeichnet dass** das Element (D) zu beiden Seiten der Aufnahme jeweils einen als Waage ausgeführten Sensor (W₁, W₂) belastet.

9. Verfahren nach einem der vorigen Ansprüche 1 bis 7, **dadurch gekennzeichnet dass** die Aufnahme (A) auf einem frei auskragenden Abschnitt des Elements (D) angeordnet ist.

10. Vorrichtung (V) zur Durchführung eines Verfahrens nach einem der vorigen Ansprüche, wobei das Modell (M) nach Vorgabe eines Originals ein vorgebbares Sollgewicht (G) und an einer vorgebbaren Raumposition einen Soll-Schwerpunkt (S) aufweist,
mit einer Aufnahme (A) zur lösbaren Befestigung des aus einzelnen Komponenten zusammengebauten Modells (M), wobei die Aufnahme (A) um eine gedachte Achse (X) frei drehbar ist, wobei die Aufnahme drehfest mit oder drehbar um ein entlang der X-Achse ausgebildetes Element (D) angeordnet ist, wobei der Schwerpunkt der Aufnahme (A) in der Drehachse (X) liegt, und wobei Sensoren (W₁, W₂) zur Ermittlung des auf dem Element (D) lastenden Gewichts vorgesehen sind,
a) wobei die Sensoren (W₁, W₂) zu beiden Seiten der Aufnahme angeordnet sind, oder
b) wobei die Aufnahme (A) auf einem frei auskragenden Abschnitt des Elements (D) angeordnet ist und die Sensoren (W₁, W₂) auf einer Seite der Aufnahme (A) angeordnet sind.

11. Vorrichtung nach dem vorhergehenden Anspruch, **dadurch gekennzeichnet, dass** die Achse (X) horizontal angeordnet ist.

12. Vorrichtung nach einem der beiden vorhergehenden Ansprüche, **dadurch gekennzeichnet, dass** eine Auswerteeinheit (T) vorgesehen ist zur Anzeige und/oder Verarbeitung der aktuell vom Modell auf das Element (D) einwirkenden Gewichtskraft und der aus einer Gewichtsverteilung oder einem Drehmoment ermittelten Lage des aktuellen Modell-Schwerpunkts in X-Richtung.

13. Vorrichtung nach einem der vorhergehenden Vorrichtungsansprüche, **dadurch gekennzeichnet, dass** das Element (D) zu beiden Seiten der Aufnahme jeweils einen als Waage ausgeführten Sensor (W1, W2) belastet.

14. Verfahren zur Ermittlung des tatsächlichen Schwerpunkts (S) eines nach einem der vorhergehenden Verfahrensansprüche geschaffenen Modells (M), umfassend folgende Schritte:
a) Aufhängen des Modells (M) an einem ersten am Model angeordneten Befestigungspunkt (P₁) mittels eines flexiblen Strangs (R), an dem oberhalb des Befestigungspunkts (P₁) in vorgebbarem Abstand wenigstens zwei Markierungselemente (E₁, E₂) angeordnet sind;
b) Auspendeln des Modells (M), bis es eine Ruhelage einnimmt, wobei die Markierungselemente (E₁, E₂) auf einer ersten Geraden (L₁) zu liegen kommen;
c) Rechnergestützte Ermittlung der räumlichen Lage der Markierungselemente (E₁, E₂) und des Modells (M)
d) Wenigstens einmalige Wiederholung der Schritte a) bis c), wobei das Model für jede Wiederholung an einem weiteren, vom ersten Punkt (P₁) verschiedenen Befestigungspunkt (P₂, P₃ ...) aufgehängt wird, so dass die Markierungselemente (E₁, E₂) auf einer weiteren Geraden (L₂, L₃...) zu liegen kommen;
e) Rechnergestützte Ermittlung des Schnittpunkts oder der Mitte des minimalen Abstands der Geraden (L₁, L₂, L₃...) als tatsächlicher Schwerpunktsort (S) des Modells.

15. Verfahren nach Anspruch 14, **dadurch gekennzeichnet, dass** die rechnergestützte Ermittlung der räumlichen Lage des Modells (M) mittels Abtasten mehrerer Oberflächenpunkte des Models (M) geschieht, an denen anschließend die im Rechner hinterlegte Geometrie des Modells ausgerichtet wird, um so die tatsächliche Lage und Ausrichtung des Models im Raum zu bestimmen.

## Claims

1. Method for producing a model (M), in particular a model of a motor-vehicle component, which after predetermination of an original has a predeterminable desired weight (G) and at a predeterminable position in space has a desired centre of gravity (S), comprising the following steps:
a) set-up of the model with approximation to the desired weight (G) striven for, starting from a starting weight (G₀), where G₀ < G;
b) arrangement of the assembled model on a receiver (A) of a measuring device (V), wherein the receiver (A) is freely rotatable about an imaginary axis (X), wherein the receiver is arranged so as to be rotationally fixed with or rotatable about an element (D) that is formed along the X-axis, wherein the centre of gravity of the receiver (A) lies in the rotational axis (X), and wherein sensors (W₁, W₂) are provided to ascertain the weight weighing on the axis (X);
c) introduction and/or rearrangement of additional weights on or in at least one component of the model for further approximation to the desired weight (G) and/or in order to change the current position of the centre of gravity in the direction of the desired centre of gravity (S),
d₁) checking of the total weight with the aid of the sensor signals and/or
d₂) computational examination of the position of the current centre of gravity in the X-direction with the aid of the sensor signals and/or
d₃) visual examination and/or examination by measuring techniques of the current position of the centre of gravity in the Y- or Z-direction on the basis of gravitational-force-induced rotational movements or torques of the model about the X-axis, induced by Y- or Z-deviations of the current centre of gravity from the desired centre of gravity (S),
e) repetition of steps c) and d) until the deviations between the desired and the actual values for the total weight and/or the centre of gravity lie within predeterminable tolerances.

2. Method for producing a model (M), in particular a model of a motor-vehicle component, which after predetermination of an original has a predeterminable desired weight (G) and at a predeterminable position in space has a desired centre of gravity (S), comprising the following steps:
a) set-up of the model with approximation to the desired weight (G) striven for, starting from a starting weight (G₀), where G₀ > G;
b) arrangement of the assembled model on a receiver (A) of a measuring device (V), wherein the receiver (A) is freely rotatable about an imaginary axis (X), wherein the receiver is arranged so as to be rotationally fixed with or rotatable about an element (D) that is formed along the X-axis, wherein the centre of gravity of the receiver (A) lies in the rotational axis (X), and wherein sensors (W₁, W₂) are provided to ascertain the weight weighing on the axis (X);
c) removal of material from at least one component of the model for further approximation to the desired weight (G) and/or in order to change the current position of the centre of gravity in the direction of the desired centre of gravity (S),
d₁) checking of the total weight with the aid of the sensor signals and/or
d₂) computational examination of the position of the current centre of gravity in the X-direction with the aid of the sensor signals and/or
d₃) visual examination and/or examination by measuring techniques of the current position of the centre of gravity in the Y- or Z-direction on the basis of gravitational-force-induced rotational movements or torques of the model about the X-axis, induced by Y- or Z-deviations of the current centre of gravity from the desired centre of gravity (S),
e) repetition of steps c) and d) until the deviations between the desired and the actual values for the total weight and/or the centre of gravity lie within predeterminable tolerances.

3. Method according to claim 1 or 2, **characterised in that** the axis (X) is arranged horizontally.

4. Method according to claim 1, 2 or 3, **characterised in that** the element (D) on at least one side of the receiver (A) loads a first weight- or torque-sensor (W₁), and wherein a further weight- or torque-sensor (W₂) is loaded by the element (D) on the other side of the receiver (A) or by the device (V).

5. Method according to one of the previous claims, **characterised in that** the positioning to be expected of additional weights or of material that is to be removed is ascertained approximately according to the position and weight prior to the assembly of the model (M).

6. Method according to one of the previous claims, **characterised in that** that structural space of the model or of its components, which in the original does not need to be kept free for other purposes, is used for the installation of reinforcements in consideration of the desired weight (G) and centre of gravity (S) striven for.

7. Method according to one of the previous claims, **characterised in that** prior to the assembly additional weights and/or reinforcements are already arranged on or in at least one component of the model (M).

8. Method according to one of the previous claims, **characterised in that** on both sides of the receiver the element (D) loads a respective sensor (W₁, W₂) constructed as a balance.

9. Method according to one of the previous claims 1 to 7, **characterised in that** the receiver (A) is arranged on a freely protruding section of the element (D).

10. A device (V) for carrying out a method according to one of the previous claims, wherein the model (M) after predetermination of an original has a predeterminable desired weight (G) and at a predeterminable position in space has a desired centre of gravity (S),
having a receiver (A) for the detachable securement of the model (M) assembled from individual components, wherein the receiver (A) is freely rotatable about an imaginary axis (X), wherein the receiver is arranged so as to be rotationally fixed with or rotatable about an element (D) that is formed along the X-axis, wherein the centre of gravity of the receiver (A) lies in the rotational axis (X), and wherein sensors (W₁, W₂) are provided to ascertain the weight weighing on the element (D);
a) wherein the sensors (W₁, W₂) are arranged on both sides of the receiver, or
b) wherein the receiver (A) is arranged on a freely protruding section of the element (D), and the sensors (W₁, W₂) are arranged on one side of the receiver (A).

11. A device according to the preceding claim, **characterised in that** the axis (X) is arranged horizontally.

12. A device according to one of the two preceding claims, **characterised in that** an evaluation unit (T) is provided to indicate and/or process the force due to weight currently acting on the element (D) by the model and the position of the current model centre of gravity in the X-direction ascertained from a weight-distribution or a torque.

13. A device according to one of the preceding device claims, **characterised in that** on both sides of the receiver the element (D) loads a respective sensor (W₁, W₂) constructed as a balance.

14. Method for ascertaining the actual centre of gravity (S) of a model (M) created according to one of the preceding method claims, comprising the following steps:
a) suspension of the model (M) at a first point of securement (P₁) arranged on the model, by means of a flexible rope (R) on which at least two marking elements (E₁, E₂) are arranged above the point of securement (P₁) with predeterminable spacing;
b) oscillation of the model (M) until it takes up a position of rest, wherein the marking elements (E₁, E₂) come to lie on a first straight line (L₁);
c) computer-assisted ascertainment of the spatial position of the marking elements (E₁, E₂) and of the model (M);
d) repetition at least once of steps a) to c), wherein the model for each repetition is suspended at a further point of securement (P₂, P₃ ...) that is different from the first point (P₁) so that the marking elements (E₁, E₂) come to lie on a further straight line (L₂, L₃ ...);
e) computer-assisted ascertainment of the point of intersection of or of the centre of the minimum distance between the straight lines (L₁, L₂, L₃ ...) as an actual location of the centre of gravity (S) of the model.

15. Method according to claim 14, **characterised in that** the computer-assisted ascertainment of the spatial position of the model (M) is effected by scanning a plurality of surface points of the model (M) at which the geometry of the model stored in the computer is subsequently aligned in order thus to determine the actual position and alignment of the model in the space.

## Revendications

1. Procédé de fabrication d'un modèle (M), en particulier d'un modèle d'un composant de véhicule automobile, qui présente, conformément à un original, un poids de consigne (G) prédéfinissable et, en une position spatiale prédéfmissable, un centre de gravité de consigne (S), comprenant les étapes suivantes :
a) construction du modèle en s'approchant du poids de consigne (G) visé, en partant d'un poids de départ (G₀), où G₀ < G ;
b) agencement du modèle assemblé contre un support (A) d'un dispositif de mesure (V), où le support (A) est librement rotatif autour d'un axe imaginaire (X), où le support est agencé en rotation solidaire d'un élément (D) configuré le long de l'axe X ou en rotation autour de cet élément, où le centre de gravité du support (A) se situe dans l'axe de rotation (X), et où des capteurs (W₁, W₂) sont prévus pour déterminer le poids pesant sur l'axe (X) ;
c) mise en place et/ou réagencement de poids supplémentaires contre ou dans au moins un composant du modèle, afin de s'approcher davantage du poids de consigne (G) et/ou de modifier la position actuelle du centre de gravité en direction du centre de gravité de consigne (S),
d₁) contrôle du poids total à l'aide des signaux des capteurs, et/ou
d₂) vérification par le calcul de la position du centre de gravité actuel dans la direction X à l'aide des signaux des capteurs, et/ou
d₃) vérification visuelle et/ou métrologique de la position actuelle du centre de gravité dans la direction Y ou Z à l'aide de mouvements ou couples de rotation du modèle autour de l'axe X dus à la gravité, causés par des écarts Y ou Z du centre de gravité actuel par rapport au centre de gravité de consigne (S),
e) répétition des étapes c) et d) jusqu'à ce que les écarts entre les valeurs de consigne et les valeurs réelles pour le poids total et/ou le centre de gravité se situent dans des tolérances prédéfinissables.

2. Procédé de fabrication d'un modèle (M), en particulier d'un modèle d'un composant de véhicule automobile, qui présente, conformément à un original, un poids de consigne (G) prédéfinissable et, en une position spatiale prédéfinissable, un centre de gravité de consigne (S), comprenant les étapes suivantes :
a) construction du modèle en s'approchant du poids de consigne (G) visé, en partant d'un poids de départ (G₀), où G₀ > G ;
b) agencement du modèle assemblé contre un support (A) d'un dispositif de mesure (V), où le support (A) est librement rotatif autour d'un axe imaginaire (X), où le support est agencé en rotation solidaire d'un élément (D) configuré le long de l'axe X ou en rotation autour de cet élément, où le centre de gravité du support (A) se situe dans l'axe de rotation (X), et où des capteurs (W₁, W₂) sont prévus pour déterminer le poids pesant sur l'axe (X) ;
c) enlèvement de matériau d'au moins un composant du modèle, afin de s'approcher davantage du poids de consigne (G) et/ou de modifier la position actuelle du centre de gravité en direction du centre de gravité de consigne (S),
d₁) contrôle du poids total à l'aide des signaux des capteurs, et/ou
d₂) vérification par le calcul de la position du centre de gravité actuel dans la direction X à l'aide des signaux des capteurs, et/ou
d₃) vérification visuelle et/ou métrologique de la position actuelle du centre de gravité dans la direction Y ou Z à l'aide de mouvements ou couples de rotation du modèle autour de l'axe X dus à la gravité, causés par des écarts Y ou Z du centre de gravité actuel par rapport au centre de gravité de consigne (S),
e) répétition des étapes c) et d) jusqu'à ce que les écarts entre les valeurs de consigne et les valeurs réelles pour le poids total et/ou le centre de gravité se situent dans des tolérances prédéfmissables.

3. Procédé selon la revendication 1 ou 2, **caractérisé en ce que** l'axe (X) est agencé horizontalement.

4. Procédé selon la revendication 1, 2 ou 3, **caractérisé en ce que** l'élément (D) sollicite sur au moins un côté du support (A) un premier capteur de poids ou de couple de rotation (W₁), et où un autre capteur de poids ou de couple de rotation (W₂) est sollicité par l'élément (D) sur l'autre côté du support (A), ou par le dispositif (V).

5. Procédé selon l'une des revendications précédentes, **caractérisé en ce que** les positionnements attendus de poids supplémentaires ou de matériau à enlever sont déterminés approximativement en fonction de la position et du poids, avant l'assemblage du modèle (M).

6. Procédé selon l'une des revendications précédentes, **caractérisé en ce que** l'espace de construction du modèle ou de ses composants qui ne doit pas être réservé à d'autres fms dans l'original, est utilisé en tenant compte du poids de consigne (G) et du centre de gravité (S) visés pour mettre en place des renforcements.

7. Procédé selon l'une des revendications précédentes, **caractérisé en ce que** des poids supplémentaires et/ou des renforcements sont agencés contre ou dans au moins un composant du modèle (M) déjà avant l'assemblage.

8. Procédé selon l'une des revendications précédentes, **caractérisé en ce que** l'élément (D) sollicite, des deux côtés du support, un capteur respectif (W₁, W₂) réalisé sous forme de balance.

9. Procédé selon l'une des revendications précédentes 1 à 7, **caractérisé en ce que** le support (A) est agencé sur un tronçon faisant librement saillie de l'élément (D).

10. Dispositif (V) pour la mise en oeuvre d'un procédé selon l'une des revendications précédentes, dans lequel le modèle (M) présente, conformément à un original, un poids de consigne (G) prédéfinissable et, en une position spatiale prédéfinissable, un centre de gravité de consigne (S),
avec un support (A) pour une fixation amovible du modèle (M) assemblé à partir de composants individuels, où le support (A) est librement rotatif autour d'un axe imaginaire (X), où le support est agencé en rotation solidaire d'un élément (D) configuré le long de l'axe X ou en rotation autour de cet élément, où le centre de gravité du support (A) se situe dans l'axe de rotation (X), et où des capteurs (W₁, W₂) sont prévus pour déterminer le poids pesant sur l'élément (D),
a) où les capteurs (W₁, W₂) sont agencés des deux côtés du support, ou
b) où le support (A) est agencé sur un tronçon faisant librement saillie de l'élément (D) et les capteurs (W₁, W₂) sont agencés sur un côté du support (A).

11. Dispositif selon la revendication précédente, **caractérisé en ce que** l'axe (X) est agencé horizontalement.

12. Dispositif selon l'une des deux revendications précédentes, **caractérisé en ce qu'**il est prévu une unité de valorisation (T) pour afficher et/ou exploiter la force massique agissant actuellement du modèle sur l'élément (D) et la position, déterminée à partir d'une répartition de poids ou d'un couple de rotation, du centre de gravité actuel du modèle dans la direction X.

13. Dispositif selon l'une des revendications précédentes de dispositif, **caractérisé en ce que** l'élément (D) sollicite, des deux côtés du support, un capteur respectif (W₁, W₂) réalisé sous forme de balance.

14. Procédé pour déterminer le centre de gravité (S) effectif d'un modèle (M) créé selon l'une des revendications précédentes de procédé, comprenant les étapes suivantes :
a) suspension du modèle (M) à un premier point de fixation (P₁) agencé contre le modèle, au moyen d'une corde souple (R) contre lequel sont agencés, au-dessus du point de fixation (P₁), à une distance prédéfmissable, au moins deux éléments de repérage (E₁, E₂) ;
b) balancement du modèle (M) jusqu'à ce qu'il prenne une position de repos, où les éléments de repérage (E₁, E₂) viennent se placer sur une première droite (L₁) ;
c) détermination assistée par ordinateur de la position spatiale des éléments de repérage (E₁, E₂) et du modèle (M)
d) répétition au moins une fois des étapes a) à c), où pour chaque répétition le modèle est suspendu à un autre point de fixation (P₂, P₃ ...) différent du premier point (P₁), de sorte que les éléments de repérage (E₁, E₂) viennent se placer sur une autre droite (L₂, L₃ ...) ;
e) détermination assistée par ordinateur du point d'intersection des droites (L₁, L₂, L₃...), ou du milieu de la distance minimale entre elles, comme lieu effectif du centre de gravité (S) du modèle.

15. Procédé selon la revendication 14, **caractérisé en ce que** la détermination assistée par ordinateur de la position spatiale du modèle (M) s'effectue par balayage de plusieurs points de la surface du modèle (M) d'après lesquels s'oriente ensuite la géométrie du modèle enregistrée dans l'ordinateur, afin de déterminer ainsi la position et l'orientation effectives du modèle dans l'espace.
